# EUROPEAN PATENT SPECIFICATION

(11) **EP 3 391 016 B1**
(45) Date of publication and mention of the grant of the patent: **16.02.2022**
(21) Application number: 16809832.5
(22) Date of filing: 14.12.2016
(51) Int. Cl.: G01N 1/20

(54) **SAMPLER**
PROBENNEHMER
ÉCHANTILLONNEUR

(30) Priority: 17.12.2015 EP 15382636
(43) Date of publication of application: 24.10.2018
(73) Proprietor: Foresa, Industrias Químicas Del Noroeste, S.A.U., 36650 Caldas de Reis (Pontevedra) (ES)
(72) Inventor: TOURIÑO COUSO, Antonio, 36650 Caldas de Reis - Pontevedra (ES); PIÑEIRO RAMOS, Gonzalo, 36650 Caldas de Reis - Pontevedra (ES)
(74) Representative: Balder IP Law, S.L.
(86) International application number: PCT/EP2016/081086
(87) International publication number: WO 2017/102895

(56) References cited:
- US-A- 5 251 495
- US-A1- 2002 170 364
- US-A1- 2015 247 784

## Description

### TECHNICAL FIELD

The present invention is related to the sampling of fluids, for example, in the context of control or supervision of an industrial process involving the use and/or production of at least one fluid, such as, for example, formaldehyde.

### STATE OF THE ART

Many industrial processes involve the handling of fluids, often under conditions that make the sampling of the fluid, for example, for process and/or quality control, difficult. Sometimes, special and complex security measures have to be taken when samples are to be obtained. For example, many fluids used in industry are as such dangerous for human beings, and/or are stored or conveyed under high pressure and/or high temperatures. An example of such a fluid is formaldehyde, CH₂O, also known as methanal. Formaldehyde is used in the production of many other materials, for example, in the production of industrial resins for particle board, coatings and basic raw materials for other chemical process. The frequently used water solutions of formaldehyde are corrosive, and the handling of formaldehyde in industrial plants often takes place under pressure and/or at temperatures higher than room temperature. Therefore, taking samples of the formaldehyde containing fluids in industrial plants can be difficult and laborious.

An additional problem is that if a large sample is taken and part of it is not consumed during the subsequent analysis, the remaining part has to be dealt with carefully, basically as toxic waste. This adds additional complexity and costs.

Another frequent problem related to the collection of samples is how to avoid contamination of the sample.

Many devices for obtaining samples of fluids are known in the art. Many such devices are of the plunger type, based on the use of a syringe-like device which is connected to a section of a pipe for withdrawal of a sample of the fluid flowing through the pipe, by displacement of a plunger. An example of this kind of device is disclosed in EP-2024726-B1.

Other known methods for taking samples involve the use of a bypass line. US-2002/0041832-A1 teaches one example of the taking of samples using a bypass line.

Another example is taught by DE-29504081-U1, which teaches a sampler comprising an elongated body provided with what appears to be some kind of quick connect valves in correspondence with its ends, for connecting the sample to some kind of conduit, whereby the sampler will establish a bypass to said conduit, so that the fluid in the conduit can flow into the sampler. The device is held by a kind of handle comprising two elongated elements, so that the user does not have to hold the elongated body that contains the sample, which can be at a high temperature. Also, one of the two elongated elements is displaceable in relation to the other, and this movement is used to disconnect the sampler from the conduit.

However, this mechanism is rather complex and bulky, the inlet and outlet conduits in correspondence with the valves appear to have a rather small cross section which increases the risk of them becoming blocked when the device is used, and removing the sample from the sampler appears to require a specifically designed system for removal of the sample, involving quick connect valve members corresponding to those of the sampler.

US-2002/0170364-A1 and US-5251495-A disclose arrangements for collecting samples including quick-connects arranged after valves placed in correspondence with the axial ends of the container intended to receive the respective sample.

### DESCRIPTION OF THE INVENTION

A first aspect of the invention is defined in claim 1. The first aspect of the invention relates to a sampler, that is, a device for obtaining or collecting a sample, especially for obtaining a sample of a fluid (for example, a gas or a liquid), from an installation in, for example, a factory, warehouse, laboratory, or other industrial plant in which fluids are produced, stored and/or used. The sampler comprises:
- a body with an internal chamber for housing a sample of a fluid;
- two quick connect valve members extending from the body, for connecting the body to a device, such as a tank, conduit or other enclosure that houses and/or conveys the fluid, from which a sample is to be obtained, thereby establishing a fluid flow bypass path through one of the quick connect valve members, the chamber, and the other one of the quick connect valve members;
- a sample outlet valve comprising means, such as a rotatable or pivotable element, such as a handle or knob, or a push button, or any other suitable means for selectively setting the sample outlet valve into a closed or into an open state, whereby the open state allows the sample to exit the chamber through the sample outlet valve; and
- a vent valve comprising means, such as a rotatable or pivotable element, such as a handle or knob, or a push button, or any other suitable means, for selectively setting the vent valve into a closed or into an open state, whereby the vent valve, when in the open state, allows a fluid, such as air, an inert gas, etc., to enter and/or exit the chamber through the vent valve.

Thus, the two quick connect valve members can be used to connect the sampler to a device from which a sample is to be obtained, such as a tank or a conduit, such as a conduit for transporting a fluid within a factory or plant. The two quick connect valve members -for example, two so-called female quick connect valve members- can be mated to corresponding complementary quick connect valve members -for example, so-called male quick connect valve members- extending from for example a tank or conduit, thereby allowing quick, simple and dry connection and disconnection of the sampler, establishing and interrupting a by-pass conduit along which the fluid can flow from the tank or conduit, into the chamber, and back into the tank or conduit.

In some embodiments, the body is a substantially elongated body, the body having a first end and a second end. In some embodiments, the body has a length of more than 10, 20 or 30 cm, and/or less than 150, 100 or 60 cm. In some embodiments, the body has a maximum width or diameter of less than 10, 8, 6, 5, 4, 3, 2 or 1 cm. For example, it has been found to be practical to use a sampler having a length of more than 20 and less than 80 cm, and a diameter of less than 8 cm and preferably less than 6 cm (including the insulating cover, if any), in order to facilitate manual handling of the sampler. Relatively reduced dimensions can facilitate easy handling of the sampler, whereas sufficiently large dimensions make it possible to handle the sampler while, for example, wearing gloves (something that has proven to be difficult with very small samplers), and at the same time obtain samples having a relatively substantial volume. In some embodiments, the sample outlet valve is placed at one end of the elongated body.

In accordance with the first aspect of the invention, the two quick connect valve members are placed between the vent valve and the sample outlet valve. In some embodiments, the body has a generally cylindrical configuration. In some embodiments, the body is basically a metal tube with a vent valve at one of its ends or close to it, and a sample outlet valve at the other end. The presence of a sample outlet valve in correspondence with an end of the body makes it possible to easily discharge a sample from the chamber into, for example, a container or other device or apparatus, for example, for analysis of the sample. Deposition of the sample into the device or container can be carried out without any need for any specific and complex arrangements for removing the sample from the chamber of the sampler. For example, the fluid can exit the sample outlet valve by gravity and/or by the force exerted by another fluid supplied through the vent valve (for example, in some cases an inert fluid such as nitrogen can be used). This can be useful to reduce the risk of contamination of the sample. The vent valve facilitates the exit of the sample, for example, by allowing air or other fluids to enter the chamber at a point that is distal from the first end. The quick connect valve members are generally arranged to be in a closed state when they are not connected to the mating quick connect valve members, as known in the art. This kind of quick connect valves formed by a pair of complementary quick connect valve members -typically so-called female and male quick connect valve members- are well known in the art, they are commercially available, and there is no need to further discuss them here. For example, in some embodiments of the invention, MCB couplings from Staubli International AG (www.staubli.com) are used. They are considered to be appropriate for spill-free connection and disconnection, and have been designed to be compatible also with corrosive environments.

In installations in which the sampler is to be used to collect samples from a device, for example, from a tank or a conduit, the tank or conduit can be provided (for example, by welding, screwing, clamping, or in any other suitable way) with a supplementary member featuring two quick connect valve members complementary to those of the sample, thereby allowing the sampler to be easily coupled to the tank or conduit, so that the fluid in the tank or conduit can enter the chamber of the sampler. Thus, conventional conduits or tanks can be adapted to be compatible with the use of the sampler of the invention.

If part of the sample remains in the chamber after deposition of another part of the sample into for example a recipient or apparatus for analysis thereof, the remaining part of the sample can be re-introduced into the tank or conduit by re-connecting the sampler to the tank or conduit. This can be advantageous to avoid the problem of how to deal with a portion of a sample that is not needed for the analysis. Sometimes, the sample is a fluid that represents a health risk or that, for other reasons, should not simply be poured into a sink or otherwise dispensed with. Sometimes, the costs involved with handling this kind of sometimes toxic waste can be high. Thus, the possibility of re-introducing the fluid into the conduit or tank can be very advantageous.

Actually, the sampler can remain connected to the tank or conduit for long periods of time and, for example, it can remain connected to the tank or conduit during operation of the installation, and only be removed when a sample of the fluid is desired.

In some embodiments of the invention, the vent valve is placed in correspondence with the second end of the body. Thus, air or an inert gas can be let into the chamber at the second end, facilitating evacuation of the sample. Also, cleaning of the chamber can be performed by letting a fluid pass between the vent valve and the sample outlet valve. Also, prior to collecting a sample, an inert gas or other fluid can be introduced through the vent valve, to create an inert atmosphere inside the chamber, and/or to remove traces of previous samples.

In some embodiments, the quick connect valve members are arranged between the first end and the second end of the body, and the quick connect valve members extend substantially radially from the body.

In some embodiments of the invention, the sampler further comprising a vent tube extending from the vent valve, for example, extending from and/or coupled to the vent valve. Often, the orientation of the sampler will be vertical with the sample outlet valve downwards and the vent valve upwards. The vent tube can be useful to direct any substance exiting the vent valve away from the location where the user can be expected to have, for example, his or her face. Thereby, any fluid or other substance that exits the vent valve, for example, due to erroneous operation -such as due to opening of the vent valve when the sample is being collected- or other accidents, can be directed to an area where harm to the user is not likely to take place. For example, when a collected sample is being ejected from the sampler via the sample outlet valve, the user is not likely to place his or her face in correspondence with the sample outlet valve. Thus, directing a free end of the vent tube to this area can be helpful to minimize the risk of harm to the user. The vent tube can also be used to facilitate the injection of a fluid into the chamber, for example, for injecting an inert gas or fluid into the chamber, for example, prior to collecting a sample, or in order to help to eject a sample from the chamber, and/or to minimize the risk of contamination of the sample. In some embodiments the vent tube is rigid, and in other embodiments the vent tube is flexible.

In some embodiments of the invention, the vent tube has a length that is larger than 80% of the largest dimension of the body, for example, in the case of an elongated body, larger than 80% of the distance between the first end of the body and the second end of the body. Using a relatively long vent tube, the exit opening of the vent tube can be placed relatively far away from the vent valve, for example, adjacent to the sample output valve. A relatively long vent tube can also facilitate the connection between the sampler and a source of, for example, inert gas.

In accordance with the first aspect of the invention, the quick connect valve members extend substantially radially from the body, that is, substantially perpendicularly to a longitudinal axis of the body, in parallel with each other. This can facilitate the quick connection of the sampler to a device such as a tank or conduit housing or conveying a fluid, a sample of which is to be taken: the sampler can be placed in parallel with the relevant wall or section of the device, and then connected to it by simply moving the sampler in parallel with the axes of the quick connect valve members, towards the mating quick connect valve members.

In some embodiments, each quick connect valve member comprises a release member including, for example, a slidably arranged sleeve or similar, arranged to be displaced in the radial direction (taking the body as the reference, that is, in an axial direction if the quick connect valve member itself is taken as the reference) for releasing the quick connect valve member from a mating quick connect valve member of the device from which a sample is to be obtained. It has been found that this can facilitate the release of the sampler from the external device, such as from a tank or conduit, after collecting the sample: it is easy for a user to displace the release members in the radial direction, pushing them or pulling them with the fingers of the user, while at the same time holding the sampler with the hands. This facilitates the process of obtaining a sample in a rapid and simple way. An example of female quick connect valve members featuring this kind of radially displaceable sleeve -that is, radially displaceable in relation to the body of the sampler when the quick connect valve member extends radially from the body of the sampler, but axially displaceable in relation to the quick release valve member itself- are the female quick release members of at least some MCB couplings available from Staubli International AG.

In some embodiments of the invention, the sampler is configured (including sized and shaped) so that a human user can grip the body with two hands, and at the same time displace the release member of one of the quick connect valve members with two fingers of one hand, and displace the release member of the other quick connect valve member with two fingers of the other hand. For example, in some embodiments of the invention, the release members can easily be pulled towards the body of the sampler while the sampler is being held. One single person can carry out the quick disconnect while safely holding the sampler with his or her hands.

In some embodiments of the invention, the quick connect valve members are dry disconnect valve members. Dry disconnect valves are known in the art and useful to prevent any fluid from exiting in a non-desired manner when the sampler is being connected to or disconnected from a device, such as a tube or a tank, from which the sample is to be taken.

In some embodiments of the invention, the means for selectively setting the sample outlet valve into a closed or into an open state includes a rotary member or a push member for opening and closing the sample outlet valve, and wherein the sample outlet valve is preferably biased towards the closed state, thereby reducing the risk that the valve accidentally remains in an open state. For example, the sample outlet valve can be a needle drain valve, which the user can operate by turning a member provided at the side of the valve. In some embodiments, resilient means such as a spring or similar are incorporated for biasing the valve towards the closed state.

In some embodiments of the invention, the means for selectively setting the vent valve into a closed or into an open state includes a rotary member or a push member for opening and closing the vent valve, and wherein the vent valve is preferably biased towards the closed state, thereby reducing the risk that the valve accidentally remains in an open state. In some embodiments, resilient means such as a spring or similar are incorporated for biasing the valve towards the closed state.

In some embodiments of the invention, the body is at least partly covered by an insulating material. The body can be made of a heat conductive material, such as a metal, for example, stainless steel, aluminum, or any other suitable material. In such cases, it can be advantageous to cover the body with an insulating material, for example, a polymer material. In some embodiments, the insulating cover is a removable cover (for example, with a Velcro closure or any other suitable closure), thereby allowing for easy replacement of the cover, for example, in order to adapt the sampler to a specific use, to give it a color according to a corporate color code, etc. It can sometimes be preferred to use a material having a high friction coefficient, to minimize the risk that the sampler will slip while being manipulated by the user. For example, the insulating material may be neoprene, with excellent anti-slip properties and generally compatible with the skin of human beings.

In some embodiments of the invention, each of the two quick connect valve members defines a conduit between a distal opening of the respective quick connect valve member and the chamber, wherein said conduit has a substantially circular cross section with a diameter of not less than 3mm at any position between the distal opening and the chamber when the quick connect valve member is mated to a complementary quick connect valve member, with the valve in an open state. Using conduits with a relatively large cross section and without any portions featuring a small cross section minimizes the risk of jamming of the conduits, for example, due to accumulation of matter due to the use of the sampler.

In some embodiments, the sampler further comprises a rupture disc arranged to be triggered when the pressure within the sampler exceeds a certain threshold. Thus, the rupture disc can break and provide for pressure relief by allowing fluid to exit from the sampler in a relatively controlled manner, reducing the risk of severe damage to the sampler and/or to a user of the sampler in the case of overpressure within the sampler during, for example, sampling or when fluid is injected through the vent tube. In some embodiments, the rupture disc is positioned in correspondence with the second end of the body, for example, between the vent valve and the body. The rupture disc can in some embodiments be an independent member that is connected to the rest of the sampler via a threaded connection.

A further aspect of the invention relates to a system comprising a sampler as described above, wherein the system further comprises at least one supplementary member featuring two quick connect valve members complementary to the quick connect valve members of the sampler, the supplementary member being configured for attachment, for example, by welding, screwing, clamping or in any other way, to a tank or conduit, such as in correspondence with a hole or opening in the tank or conduit, so as to allow the sampler to be coupled to the tank or conduit, so that fluid in the tank or conduit can enter the chamber of the sampler. Thus, conventional conduits or tanks can be adapted to be compatible with the sampler of the invention, in a simple and standardized manner. For example, kits comprising a sampler and one or more supplementary members adapted for use with the sampler can be commercialized, and/or the supplementary members can be commercialized to allow an owner of a sampler to adapt an installation for housing and/or conveying fluids so that the sampler can be used with that installation. One advantage of providing this kind of supplementary member is that the purchaser can be sure that the complementary quick connect valve members are compatible with the sampler and placed at the exactly correct distance from each other to allow the sampler to be adequately coupled to them, for example, for the purpose of collecting a sample. Thus, adaptation of the installation can be carried out easily, by merely adding the supplementary member to the installation in correspondence with a hole or opening in a tank or conduit, without requiring precision work by the person in charge of the adaptation.

For enhanced safety, the supplementary member can comprise additional fluid path cut-off means to make sure that no fluid will accidentally exit the quick connect valve members.

A further aspect of the invention relates to a method of obtaining a sample of a fluid, comprising connecting a sampler as described above to a device from which a sample is to be obtained, by connecting the quick connect valve members of the sampler to corresponding quick connect valve members of the device from which a sample is to be obtained, by pushing the sampler towards the device from which a sample is to be obtained. That is, a simple push action can be enough to carry out the connection between the sampler and the device from which a sample is to be taken.

In some embodiments of the invention, the method further comprises removing the sampler after obtaining the sample, by performing a disconnect operation including displacing a release member associated with one of the quick connect valve members with one or more fingers of one hand, and displacing a release member associated with the other quick connect valve members with one or more fingers of another hand, while holding the sampler with both hands. This approach has been found to be practical in order to allow one person to carry out the disconnection between sampler and device in an easy and secure manner way.

A further aspect of the invention relates to a method of introducing a substance into a fluid housed in a device such as a conduit or tank, comprising the steps of:
introducing the substance into a sampler as described above,
coupling the sampler to the device using the quick connect valve members of the sampler,
and circulating fluid from the device, through the chamber of the sampler, and back into the device. That is, the sampler is not only useful for obtaining samples, but can actually be used to introduce a substance, for example, another fluid, into the fluid.

In some of embodiments of the methods described above, the fluid comprises formaldehyde, phenol, Vinyl Acetate Monomer and/or methanol. For example, as explained above, due to the characteristics of for example formaldehyde and considering the conditions under which it is often handled, stored and transported in for example factories or other installations, a sampler as described above can be especially useful for manipulating this kind of substances, in an easy manner and with minimized risk for the operator.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 is a schematic side view of a sampler in accordance with an embodiment of the invention, connected to mating complementary quick connect valve members.
Figure 2 is a schematic side view of the sampler of figure 1, connected to mating male quick connect members extending from a conduit.
Figure 3 is a schematic side view of the sampler of figure 1, connected to mating male quick connect members extending from a base member welded to a conduit.
Figure 4 is a schematic side view of the sampler of figure 1, connected to mating male quick connect members extending from a base member welded to a tank.
Figure 5 schematically illustrates the components of a sampler in accordance with an embodiment of the invention.
Figure 6 schematically illustrates male and female quick connect valve members used in an embodiment of the invention.
Figure 7 schematically illustrates a user holding a sampler in accordance with an embodiment of the invention, with one hand.
Figure 8 schematically illustrates a user intending to remove a sampler in accordance with an embodiment of the invention, from two male quick connect valve members associated to, for example, a conduit or tank.
Figure 9 schematically illustrates the steps of taking a sample of a fluid in a tank or conduit, using a sampler in accordance with an embodiment of the invention.
Figure 10 schematically illustrates the steps of introducing a substance into a tank or conduit, using a sampler in accordance with an embodiment of the invention.
Figure 11 schematically illustrates the components of the samples in accordance with an alternative embodiment of the invention.

### DESCRIPTION OF WAYS OF CARRYING OUT THE INVENTION

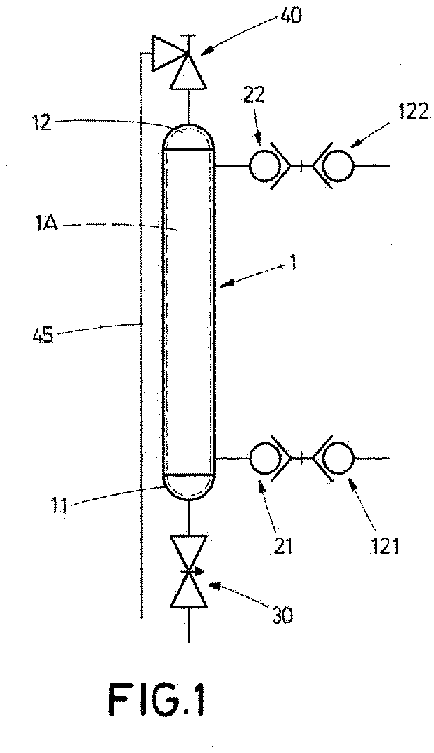

Figure 1 schematically illustrates a sampler in accordance with an embodiment of the invention, comprising an elongated, substantially cylindrical, body 1 with a schematically illustrated internal chamber 1A, namely, an internal cavity of the body 1. Two quick connect valve members 21, 22 extend from the body 1. They extend radially in relation to the longitudinal axis of the body. These quick connect valve members, namely, in this embodiment, female quick connect valve members, for example, the female parts of stainless steel Stäubli^{®} MCB couplings, are intended to connect the body to the device from which a sample is to be obtained, such as a tank or tube, by means of complementary male quick connect valve members 121, 122, such as the male parts of the stainless steel Stäubli^{®} MCB couplings.

The sampler comprises a sample outlet valve 30 in correspondence with a first end 11 of the body 1, and a vent valve 40 in correspondence with a second end of the body 1. A vent tube 45 extends from the vent valve 40, and has a distal end placed in the vicinity of the sample outlet valve 30.

At least some advantages with this kind of configuration have been explained above.

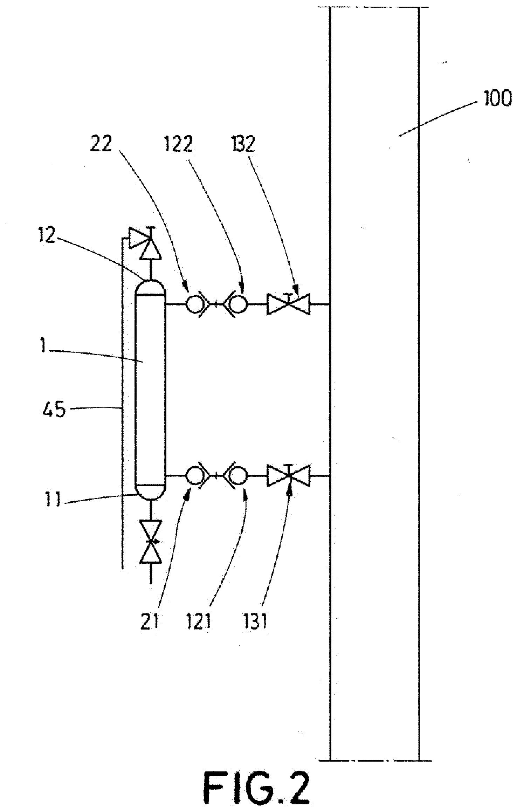

Figure 2 illustrates the sampler connected to a pipe or conduit 100, through which a fluid can flow. Here, it can see how the female quick connect valve members 21 and 22 are coupled to the corresponding male quick connect valve members 121 and 122, which, in turn, are connected to the conduit 100 via additional safety cut-off valves 131, 132. These additional cut-off valves are not strictly necessary, as the male quick connect valve members 121, 122 will in any case be closed when they are not connected to the female quick connect valve members 21, 22, but they are sometimes preferred for increased safety.

When the safety cut-off valves 131, 132 are open, the sampler constitutes a bypass to the conduit 100, and part of the fluid flowing through the conduit will flow through this bypass, for example, from the conduit 100 through the valve members 122 and 22, into the chamber of the body 1, out through the valve members 21 and 121, and back into the conduit, or the other way around, depending on the direction of the fluid in the conduit. In this way, a sample of the fluid flowing through the conduit 100 will enter the chamber 1A of the body 1 of the sampler, and the sampler can then be disconnected from the male quick connect valve members 121 and 122, thereby removing the sample, that can then be taken to another location, for example, for analysis of the sample. If not all of the fluid in the sampler is needed for the analysis, the remaining part of the fluid may optionally be re-introduced into the conduit by re-connecting the sampler to the conduit.

Prior to connecting the sampler to the conduit, an inert fluid can in some cases be introduced through the vent tube, to reduce the risk of contamination of the sample. Also, in some cases, an inert fluid can be introduced through the vent tube when the sample is removed, likewise to reduce the risk of contamination.

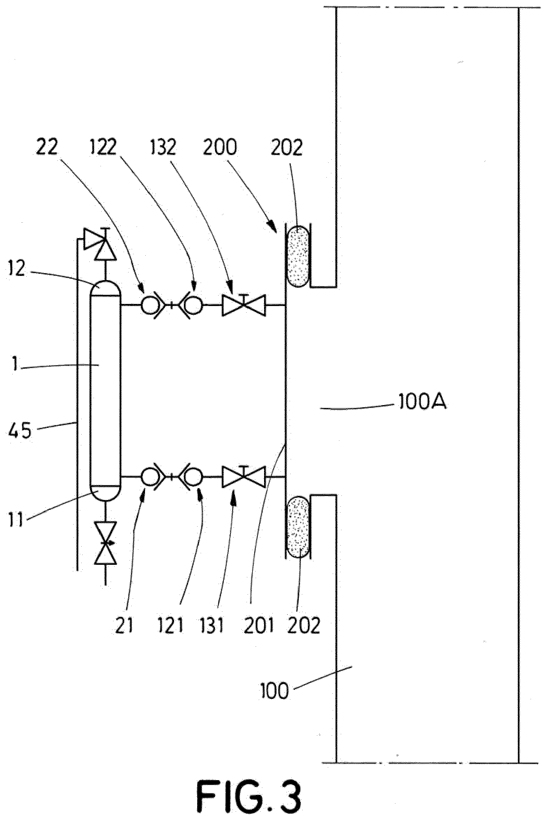

Figure 3 illustrates an arrangement similar to the one of figure 2, but including a supplementary member 200 comprising a base 201 and, extending from said base, two portions each comprising a safety cut-off valve 131, 132 and a male quick connect valve member 121, 122. The supplementary member 200 has its base 201 attached to the conduit 100 by welds 202. The use of a supplementary member 200 comprising the male quick connect valve members 121, 122 can be advantageous in that it facilitates the adaptation of an existing installation to allow samples to be collected using a sampler: instead of installing the individual male quick connect valve members in an existing pipe or conduit, an operation that may require an eye for detail by the person handling the installation in order to make sure that the two male quick connect valve members will be at the exactly right distance from each other to allow the sampler to be correctly coupled to the conduit, a pre-manufactured supplementary member 200 can be used, that can be purchased from, for example, the entity producing and/or commercializing the sampler. This supplementary member can then simply be clamped or welded to an existing pipe or conduit, in correspondence with an opening 100A in the conduit. This substantially facilitates the adaptation of an existing conduit for compatibility with the sampler: it is sufficient to make an opening, for example, by cutting away a portion of the conduit, or to use a pre-existing opening in the conduit, and to attach the supplementary member 200 to it, in any suitable way. For example, in some embodiments, it can be welded onto the conduit. In other embodiments, it can be screwed onto, for example, a flange existing in the conduit.

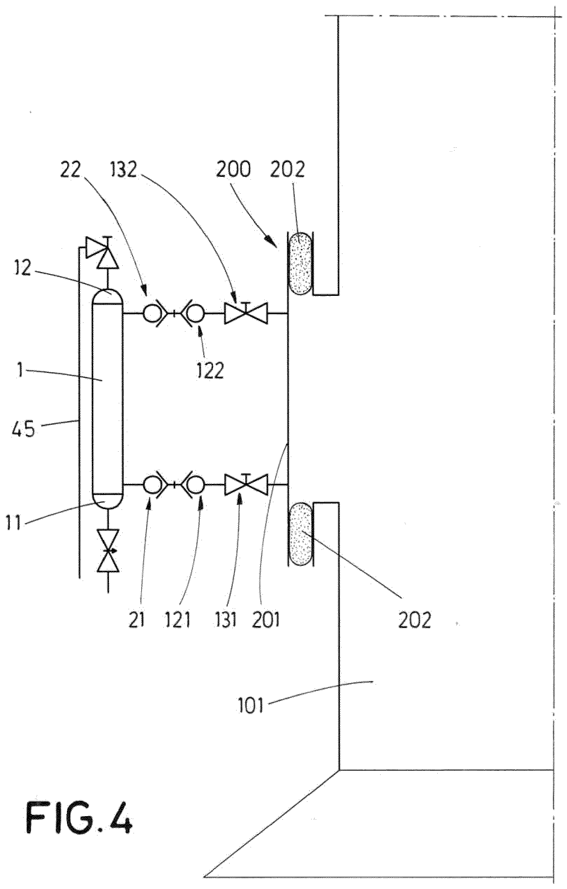

Figure 4 illustrates an analogous arrangement, but with the supplementary member 200 welded to an opening in a tank 101.

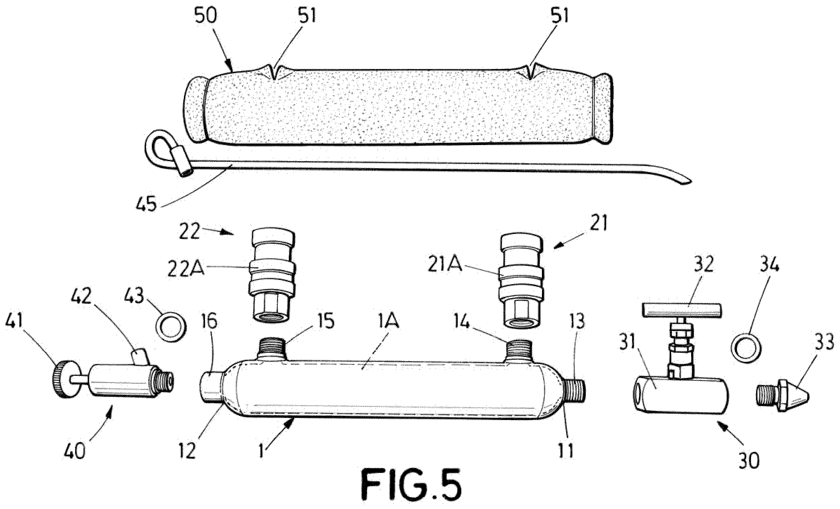

Figure 5 illustrates the components used for making the sampler in accordance with an embodiment of the invention. It can be seen how the sampler comprises a substantially cylindrical body 1 with four threaded portions 13-16 with openings where a fluid can enter and/or exit the body.

A first threaded portion 13 features an external thread and is arranged to be inserted into the sample outlet valve 30, in this case a needle valve which comprises a main valve portion 31 with a valve actuation member 32 for opening and closing the valve, and an outlet tip portion 33 which is screwed into the distal end of the main valve portion 31. A gasket 34 is provided between the main valve portion 31 and the tip portion 33 to prevent leakage.

A second threaded portion 14 and a third threaded portion 15 both feature external threads by means of which the female quick connect valve members 21 and 22, respectively, are screwed onto the body 1. Both female quick connect valve members 21 and 22 feature a respective sleeve 21A and 22A, axially displaceable in relation to the respective quick connect valve member 21 and 22, that is, radially displaceable in relation to the longitudinal axis of the body 1. As known in the art, these sleeves will move towards the body and back again when the female quick connect valve members are pushed against respective male quick connect valve members, locking the sampler onto the male quick connect valve members. To remove the sampler from the male quick connect valve members, the sleeves 21A and 22A first have to be displaced towards the body 1, an action that can be carried out manually by a user.

A fourth threaded portion 16 featuring an internal thread is used for connection of the vent valve 40, a gasket 43 being provided to prevent leakage. The vent valve 40 includes a knob 41 for opening and closing the vent valve, and an outlet portion 42 to which a vent tube 45 can be connected.

An insulating neoprene cover 50 is likewise shown in figure 5, with two openings 51 to accommodate the female quick connect valve members 21 and 22.

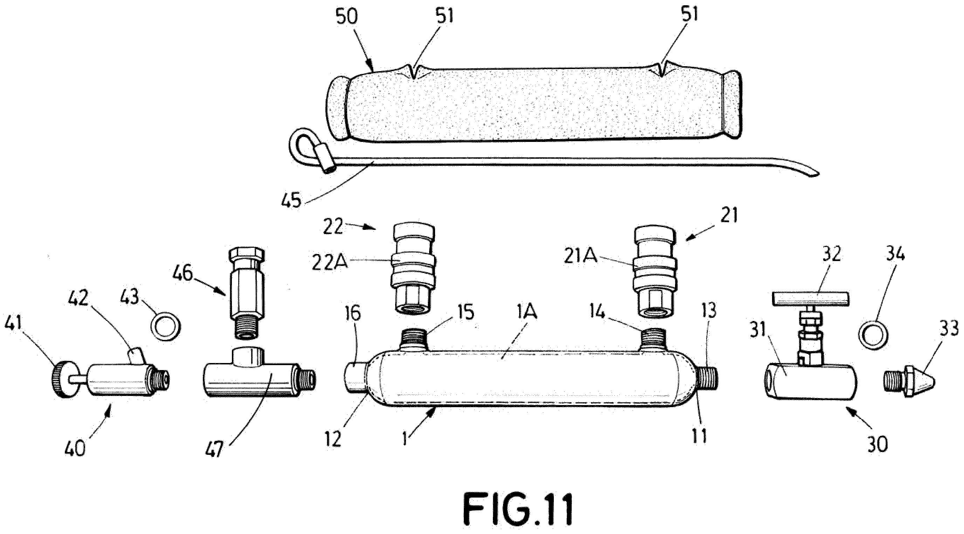

An alternative embodiment further including a rupture disc 46 is shown in figure 11. In this embodiment, the rupture disc is positioned in correspondence with the second end 12 of the body 1. In this specific embodiment, a T-shaped connector 47 is situated between the threaded portion 16 and the vent valve 40, and the rupture disc is screwed into an opening in the T-shaped connector. The rupture disc can be arranged to be triggered to break and release pressure when the pressure inside the sampler exceeds a certain threshold, thereby providing for increased safety during sampling and, for example, when a fluid is injected through the vent tube 45. Obviously, the illustrated arrangement is just an example of how the rupture disc can be arranged.

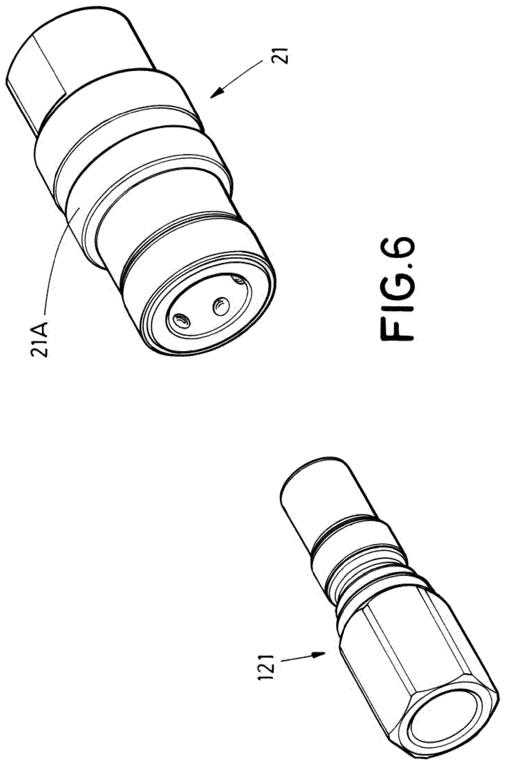

Figure 6 schematically illustrates the male 121 and female 21 quick connect valve members (namely, Stäubli^{®} MCB couplings) that can be used in accordance with an embodiment of the invention. The sleeve 21A is to be displaced towards the body 1 in order to release the male quick connect valve member 121 from the female quick connect valve member 21.

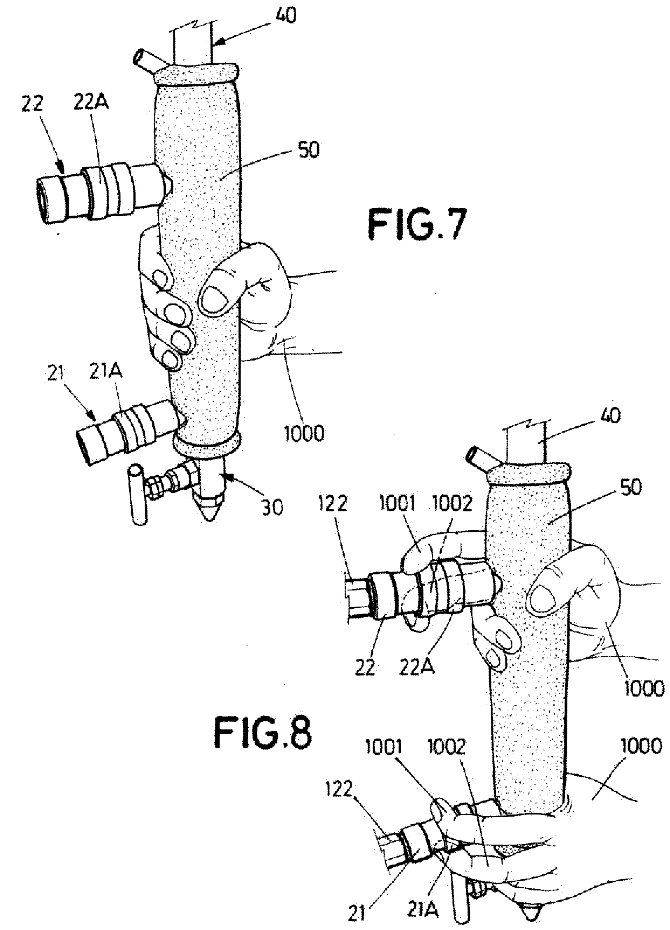

Figure 7 schematically illustrates how a user can hold and manipulate a sampler in accordance with an embodiment of the invention, with one hand 1000.

Figure 8 schematically illustrates how a user can grip, with both hands, a sampler in accordance with an embodiment of the invention, attached to two male quick connect valve members 121 and 122. The user, while gripping the sampler with the palm of the hand and the thumb, uses two fingers 1001 and 1002 of each hand to displace the sleeves 21A and 22A, thereby allowing the female quick connect valve member 21 and 22 to be unlocked from the corresponding male quick connect valve member 121 and 122, respectively. That is, the user, for obtaining a sample, can simply push the sampler onto the male quick connect valve members, whereby the male quick connect valve members will basically snap fit into the female quick connect valve members. For removal of the sampler, the user then simply has to use one or two fingers of each hand for unlocking the female quick connect valve members from the male quick connect valve members by displacing the sleeve, whereafter the sampler can be withdrawn from the male quick connect valve members.

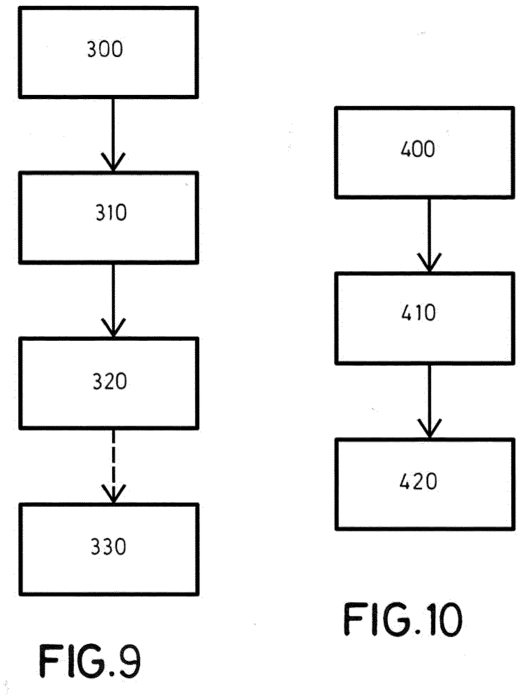

Figure 9 schematically illustrates the process of collecting a sample using a sampler in accordance with an embodiment of the invention, comprising the following steps:
300: connecting a sampler according to an embodiment of the invention to a device such as a tube or tank, thereby establishing a by-pass allowing fluid to flow into the sampler and out of the sampler, through the female quick connect valve members.
310: removing the sampler, thereby closing the quick connect valves.
320: opening the sample outlet valve and optionally the vent valve, to remove at least part of the sample from the sampler.
330: optionally re-connecting the sampler to the device, so that a portion of the sample that remains in the sampler can return to the conduit or tank.

Figure 10 schematically illustrates the process of introducing a substance into a device such as a tank or conduit, comprising the steps of:
400: introducing the substance into the sampler.
410: connecting or coupling the sampler to the device using the quick connect valve members of the sampler.
420: circulating fluid from the device, through the chamber of the sampler, and back into the device.

In this text, the term "comprises" and its derivations (such as "comprising", etc.) should not be understood in an excluding sense, that is, these terms should not be interpreted as excluding the possibility that what is described and defined may include further elements, steps, etc.

When ranges are indicated, these ranges include the end points, unless something else is specified.

## Claims

1. A sampler, comprising:
a body (1) with an internal chamber (1A) for housing a sample of a fluid;
a sample outlet valve (30) comprising means for selectively setting the sample outlet valve into a closed or into an open state;
a vent valve (40) comprising means for selectively setting the vent valve into a closed or into an open state; the sampler being further **characterized in**
two quick connect valve members (21, 22) extending from the body (1), for connecting the body (1) to a device from which a sample is to be obtained, the two quick connect valve members (21, 22) being placed between the vent valve (40) and the sample outlet valve (30);
wherein the quick connect valve members (21, 22) extend substantially radially from the body (1), in parallel with each other.

2. The sampler of claim 1, wherein the body (1) is an elongated body, the body having a first end (11) and a second end (12), and wherein the sample outlet valve (30) is placed in correspondence with the first end (11) of the body (1).

3. The sampler of claim 2, wherein the vent valve (40) is placed in correspondence with the second end (12) of the body.

4. The sampler according to claim 3, wherein the quick connect valve members (21, 22) are arranged between the first end and the second end of the body, and wherein the quick connect valve members (21, 22) extend substantially radially from the body.

5. The sampler of any of the preceding claims, further comprising a vent tube (45) extending from the vent valve (40).

6. The sampler of claim 5, wherein the body (1) is an elongated body having a first end (11) and a second end (12), wherein the vent tube (45) has a length that is larger than 80% of the distance between the first end and the second end.

7. The sampler according to any of the preceding claims, wherein each quick connect valve member (21, 22) comprises a release member (21A, 22A) arranged to be displaced in the radial direction for releasing the quick connect valve member from a mating quick connect valve member.

8. The sampler according to claim 7, configured so that a human user can grip the body (1) with two hands, and at the same time displace the release member (21A) of one of the quick connect valve members (21) with two fingers of one hand, and displace the release member (22A) of the other quick connect valve member (22A) with two fingers of the other hand.

9. The sampler according to any of the preceding claims, wherein
- the quick connect valve members are dry disconnect valve members, and/or wherein
- each of the two quick connect valve members (11, 12) defines a conduit between a distal opening of the respective quick connect valve member and the chamber (1A), wherein said conduit has a substantially circular cross section with a diameter of not less than 3mm at any position between the distal opening and the chamber.

10. The sampler according to any of the preceding claims, wherein
- the means for selectively setting the sample outlet valve (30) into a closed or into an open state includes a rotary member or a push member for opening and closing the sample outlet valve, and wherein the sample outlet valve (30) is biased towards the closed state, and/or wherein
- the means for selectively setting the vent valve (40) into a closed or into an open state includes a rotary member or a push member for opening and closing the vent valve, and wherein the vent valve (40) is biased towards the closed state.

11. The sampler according to any of the preceding claims, wherein the body is at least partly covered by an insulating material (50).

12. The sampler according to any of the preceding claims, further comprising a rupture disc (46), wherein the rupture disc is optionally placed between the body (1) and the vent valve (40).

13. A system comprising a sampler according to any of the preceding claims, wherein the system further comprises at least one supplementary member featuring two quick connect valve members complementary to the quick connect valve members (21, 22) of the sampler, the supplementary member being configured for attachment to a tank or conduit so as to allow the sampler to be coupled to the tank or conduit, so that fluid in the tank or conduit can enter the chamber of the sampler.

14. A method of obtaining a sample of a fluid, comprising connecting a sampler according to any of claims 1-7, 9-12 to a device from which a sample is to be obtained, by connecting the quick connect valve members (21, 22) of the sampler to corresponding quick connect valve members of the device from which a sample is to be obtained, by pushing the sampler towards the device from which a sample is to be obtained, the method further comprising removing the sampler after obtaining the sample, by performing a disconnect operation including displacing a release member (21A) associated with one of the quick connect valve members (21) with one or more fingers of one hand, and displacing a release member (22A) associated with the other quick connect valve members (22) with one or more fingers of another hand, while holding the sampler with both hands.

15. A method of introducing a substance into a fluid housed in a device, comprising the steps of:
introducing the substance into a sampler according to any of claims 1-12;
coupling the sampler to the device using the quick connect valve members of the sampler;
circulating fluid from the device, through the chamber (1A) of the sampler, and back into the device,
wherein the fluid optionally comprises formaldehyde, phenol, Vinyl Acetate Monomer and/or methanol.

## Patentansprüche

1. Ein Probenehmer, umfassend:
einen Körper (1) mit einer innere Kammer (1A) zur Aufnahme einer Probe eines Fluids;
ein Probenauslassventil (30), das Mittel umfasst, um das Probenauslassventil selektiv in einen geschlossenen oder einen offenen Zustand zu versetzen;
ein Entlüftungsventil (40), das Mittel umfasst, um das Entlüftungsventil selektiv in einen geschlossenen oder einen offenen Zustand zu versetzen; wobei der Probenehmer ferner **gekennzeichnet ist durch**
zwei Schnellverbindungsventilelemente (21, 22), die sich von dem Körper (1) aus erstrecken, um den Körper (1) mit einem Gerät zu verbinden, von der eine Probe zu erhalten ist, wobei die beiden Schnellverbindungsventilelemente (21, 22) zwischen dem Entlüftungsventil (40) und dem Probenauslassventil (30) angeordnet sind;
wobei sich die Schnellverbindungsventilelemente (21, 22) im Wesentlichen radial vom Körper (1) aus und parallel zueinander erstrecken.

2. Der Probenehmer nach Anspruch 1, wobei der Körper (1) ein länglicher Körper ist, wobei der Körper ein erstes Ende (11) und ein zweites Ende (12) hat, und wobei das Probenauslassventil (30) in Übereinstimmung mit dem ersten Ende (11) des Körpers (1) angeordnet ist.

3. Der Probenehmer nach Anspruch 2, wobei das Entlüftungsventil (40) in Übereinstimmung mit dem zweiten Ende (12) des Körpers angeordnet ist.

4. Der Probenehmer gemäß Anspruch 3, wobei die Schnellverbindungsventilelemente (21, 22) zwischen dem ersten Ende und dem zweiten Ende des Körpers angeordnet sind, und wobei sich die Schnellverbindungsventilelemente (21, 22) im Wesentlichen radial vom Körper erstrecken.

5. Der Probenehmer nach einem der vorhergehenden Ansprüche, ferner umfassend ein Entlüftungsrohr (45), das sich von dem Entlüftungsventil (40) erstreckt.

6. Der Probenehmer nach Anspruch 5, wobei der Körper (1) ein länglicher Körper mit einem ersten Ende (11) und einem zweiten Ende (12) ist, wobei das Entlüftungsrohr (45) eine Länge hat, die größer als 80 % des Abstands zwischen dem ersten Ende und dem zweiten Ende ist.

7. Der Probenehmer gemäß einem der vorhergehenden Ansprüche, wobei jedes Schnellverbindungsventilelement (21, 22) ein Freigabeelement (21A, 22A) umfasst, das so beschaffen ist, dass es in der radialen Richtung verschoben werden kann, um das Schnellverbindungsventilelement von einem passenden Schnellverbindungsventilelement zu lösen.

8. Der Probenehmer gemäß Anspruch 7, der so eingerichtet ist, dass ein menschlicher Benutzer den Körper (1) mit zwei Händen greifen kann und gleichzeitig das Freigabeelement (21A) eines der Schnellverbindungsventilelemente (21) mit zwei Fingern einer Hand verschieben kann und das Freigabeelement (22A) des anderen Schnellverbindungsventilelements (22A) mit zwei Fingern der anderen Hand verschieben kann.

9. Der Probenehmer gemäß einem der vorhergehenden Ansprüche, wobei
- die Schnellverbindungsventilelemente Trockentrennventilelemente sind, und/oder wobei
- jedes der beiden Schnellverbindungsventilelemente (11, 12) eine Leitung zwischen einer distalen Öffnung des jeweiligen Schnellverbindungsventilelements und der Kammer (1A) definiert, wobei die Leitung einen im Wesentlichen kreisförmigen Querschnitt mit einem Durchmesser von nicht weniger als 3 mm an jeder Position zwischen der distalen Öffnung und der Kammer aufweist.

10. Der Probenehmer gemäß einem der vorhergehenden Ansprüche, wobei
- das Mittel, um das Probenauslassventil (30) selektiv in einen geschlossenen oder einen offenen Zustand zu versetzen, ein Drehelement oder ein Drückelement zum Öffnen und Schließen des Probenauslassventils enthält, und wobei das Probenauslassventil (30) in Richtung des geschlossenen Zustands vorgespannt ist,
und/oder wobei
- das Mittel, um das Entlüftungsventil (40) selektiv in einen geschlossenen oder einen offenen Zustand zu versetzen ein Drehelement oder ein Drückelement zum Öffnen und Schließen des Entlüftungsventils enthält, und wobei das Entlüftungsventil (40) in Richtung des geschlossenen Zustands vorgespannt ist.

11. Der Probenehmer gemäß einem der vorhergehenden Ansprüche, wobei der Körper zumindest teilweise von einem Isoliermaterial (50) bedeckt ist.

12. Der Probenehmer gemäß einem der vorhergehenden Ansprüche, ferner umfassend eine Berstscheibe (46), wobei die Berstscheibe optional zwischen dem Körper (1) und dem Entlüftungsventil (40) angeordnet ist.

13. Ein System, umfassend einen Probenehmer gemäß einem der vorhergehenden Ansprüche, wobei das System ferner mindestens ein zusätzliches Element umfasst, das zwei Schnellverbindungsventilelemente aufweist, die komplementär zu den Schnellverbindungsventilelementen (21, 22) des Probenehmers sind, wobei das zusätzliche Element zur Befestigung an einem Tank oder einer Leitung eingerichtet ist, so dass der Probenehmer mit dem Tank oder der Leitung verbunden werden kann, so dass Fluid in dem Tank oder der Leitung in die Kammer des Probenehmers eintreten kann.

14. Ein Verfahren zum Erhalten einer Probe eines Fluids, umfassend das Verbinden eines Probenehmers gemäß einem der Ansprüche 1-7, 9-12 mit einem Gerät, aus dem eine Probe erhalten werden soll, durch Verbinden der Schnellverbindungsventilelemente (21, 22) des Probenehmers mit entsprechenden Schnellverbindungsventilelementen des Geräts, aus dem eine Probe erhalten werden soll, durch Drücken des Probenehmers zu dem Gerät, aus dem eine Probe erhalten werden soll, wobei das Verfahren ferner das Entfernen des Probenehmers nach dem Erhalten der Probe umfasst, durch Durchführen eines Trennvorgangs, enthaltend das Verschieben eines Freigabeelements (21A), das einem der Schnellverbindungsventilelemente (21) zugeordnet ist, mit einem oder mehreren Fingern einer Hand und das Verschieben eines Freigabeelements (22A), das dem anderen Schnellverbindungsventilelement (22) zugeordnet ist, mit einem oder mehreren Fingern einer anderen Hand, während der Probenehmer mit beiden Händen gehalten wird.

15. Ein Verfahren zum Einbringen einer Substanz in ein Fluid, das in einem Gerät aufgenommen ist, umfassend die folgenden Schritte:
Einbringen der Substanz in einen Probenehmer gemäß einem der Ansprüche 1-12;
Verbinden des Probenehmers mit dem Gerät unter Verwendung der Schnellverbindungsventilelemente des Probenehmers;
Zirkulieren von Fluid von dem Gerät durch die Kammer (1A) des Probenehmers und zurück in das Gerät,
wobei das Fluid optional Formaldehyd, Phenol, Vinylacetatmonomer und/oder Methanol umfasst.

## Revendications

1. Échantillonneur comprenant :
un corps (1) avec une chambre interne (1A) pour recevoir un échantillon d'un fluide ;
une valve de sortie d'échantillon (30) comprenant un moyen pour régler sélectivement la valve de sortie d'échantillon dans un état fermé ou dans un état ouvert ;
une valve d'aération (40) comprenant un moyen pour régler sélectivement la valve d'aération dans un état fermé ou dans un état ouvert ; l'échantillonneur étant en outre **caractérisé en ce que** :
deux éléments de valve à raccord rapide (21, 22) s'étendant à partir du corps (1), pour raccorder le corps (1) à un dispositif à partir duquel un échantillon doit être obtenu, les deux éléments de valve à raccord rapide (21, 22) étant placés entre la valve d'aération (40) et la valve de sortie d'échantillon (30) ;
dans lequel les éléments de valve à raccord rapide (21, 22) s'étendent sensiblement radialement à partir du corps (1), parallèlement entre eux.

2. Échantillonneur selon la revendication 1, dans lequel le corps (1) est un corps allongé, le corps ayant une première extrémité (11) et une seconde extrémité (12), et dans lequel la valve de sortie d'échantillon (30) est placée en correspondance avec la première extrémité (11) du corps (1).

3. Échantillonneur selon la revendication 2, dans lequel la valve d'aération (40) est placée en correspondance avec la seconde extrémité (12) du corps.

4. Échantillonneur selon la revendication 3, dans lequel les éléments de valve à raccord rapide (21, 22) sont agencés entre la première extrémité et la seconde extrémité du corps, et dans lequel les éléments de valve à raccord rapide (21, 22) s'étendent sensiblement radialement à partir du corps.

5. Échantillonneur selon l'une quelconque des revendications précédentes, comprenant en outre un tube d'évent (45) s'étendant à partir de la valve d'aération (40).

6. Échantillonneur selon la revendication 5, dans lequel le corps (1) est un corps allongé ayant une première extrémité (11) et une seconde extrémité (12), dans lequel le tube d'évent (45) a une longueur qui est supérieure à 80 % de la distance entre la première extrémité et la seconde extrémité.

7. Échantillonneur selon l'une quelconque des revendications précédentes, dans lequel chaque élément de valve à raccord rapide (21, 22) comprend un élément de libération (21A, 22A) agencé pour être déplacé dans la direction radiale afin de libérer l'élément de valve à raccord rapide d'un élément de valve à raccord rapide de couplage.

8. Échantillonneur selon la revendication 7, configuré de sorte qu'un utilisateur humain puisse saisir le corps (1) avec deux mains et en même temps, déplacer l'élément de libération (21A) de l'un des éléments de valve à raccord rapide (21) avec deux doigts d'une main, et déplacer l'élément de libération (22A) de l'autre élément de valve à raccord rapide (22A) avec deux doigts de l'autre main.

9. Échantillonneur selon l'une quelconque des revendications précédentes, dans lequel :
- les éléments de valve à raccord rapide sont des éléments de valve de déconnexion à sec, et/ou dans lequel :
- chacun des deux éléments de valve à raccord rapide (11, 12) définit un conduit entre une ouverture distale de l'élément de valve à raccord rapidement respectif et la chambre (1A), dans lequel ledit conduit a une section transversale sensiblement circulaire avec un diamètre non inférieur à 3 mm dans n'importe quelle position entre l'ouverture distale et la chambre.

10. Échantillonneur selon l'une quelconque des revendications précédentes, dans lequel :
- le moyen pour régler sélectivement la valve de sortie d'échantillon (30) dans un état fermé ou dans un état ouvert comprend un élément rotatif ou un élément de poussée pour ouvrir et fermer la valve de sortie d'échantillon, et dans lequel la valve de sortie d'échantillon (30) est sollicitée vers l'état fermé,
et/ou dans lequel :
- le moyen pour régler sélectivement la valve d'aération (40) dans un état fermé ou dans un état ouvert comprend un élément rotatif ou un élément de poussée pour ouvrir et fermer la valve d'aération, et dans lequel la valve d'aération (40) est sollicitée vers l'état fermé.

11. Échantillonneur selon l'une quelconque des revendications précédentes, dans lequel le corps est au moins partiellement recouvert par un matériau isolant (50).

12. Échantillonneur selon l'une quelconque des revendications précédentes, comprenant en outre un disque de rupture (46), dans lequel le disque de rupture est facultativement placé entre le corps (1) et la valve d'aération (40).

13. Système comprenant un échantillonneur selon l'une quelconque des revendications précédentes, dans lequel le système comprend en outre au moins un élément supplémentaire présentant deux éléments de valve à raccord rapide complémentaires des éléments de valve à raccord rapide (21, 22) de l'échantillonneur, l'élément supplémentaire étant configuré pour la fixation à une cuve ou conduit afin de permettre le couplage de l'échantillonneur à la cuve ou au conduit, de sorte que le fluide dans la cuve ou le conduit peut entrer dans la chambre de l'échantillonneur.

14. Méthode pour obtenir un échantillon d'un fluide, comprenant l'étape consistant à raccorder un échantillonneur selon l'une quelconque des revendications 1 à 7, 9 à 12, à un dispositif à partir duquel un échantillon doit être obtenu, en raccordant les éléments de valve à raccord rapide (21, 22) de l'échantillonneur aux éléments de valve à raccord rapide correspondants du dispositif à partir duquel un échantillon doit être obtenu, en poussant l'échantillonneur vers le dispositif à partir duquel un échantillon doit être obtenu, la méthode comprenant en outre l'étape consistant à retirer l'échantillonneur après l'obtention de l'échantillon, en réalisant une opération de déconnexion comprenant l'étape consistant à déplacer un élément de libération (21A) associé avec l'un des éléments de valve à raccord rapide (21) avec un ou plusieurs doigts d'une main, et déplacer un élément de libération (22A) associé avec les autres éléments de valve à raccord rapide (22) avec un ou plusieurs doigts de l'autre main, tout en maintenant l'échantillonneur avec les deux mains.

15. Méthode pour introduire une substance dans un fluide logé dans un dispositif, comprenant les étapes consistant à :
introduire la substance dans un échantillonneur selon l'une quelconque des revendications 1 à 12 ;
coupler l'échantillonneur au dispositif en utilisant les éléments de valve à raccord rapide de l' échantillonneur ;
faire circuler le fluide depuis le dispositif, à travers la chambre (1A) de l'échantillonneur, et à nouveau dans le dispositif,
dans lequel le fluide comprend facultativement le formaldéhyde, le phénol, un monomère d'acétate de vinyle et/ou le méthanol.
